# EUROPEAN PATENT APPLICATION

(11) **EP 1 942 294 A1**
(43) Date of publication of application: **09.07.2008**
(21) Application number: 07000037.7
(22) Date of filing: 02.01.2007
(51) Int. Cl.: F16J 15/44, F01D 11/02

(54) **Sealing device for a turbine**

(71) Applicant: SIEMENS AKTIENGESELLSCHAFT, 80333 München (DE)
(72) Inventor: Göransson, Aake, 61237 Finspong (SE); Nilsson, Aasa, 61242 Finspong (SE); Wikström, Rolf, 61237 Finspong (SE)

(57) **Abstract**

A sealing device (10) for sealing a high pressure side (20) from a low pressure side (22) in a space (18) between a stationary component (12) and a rotary component (14) rotating about a rotary axis (16), said sealing device (10) including a sealing housing (24) having a groove (26), and a sealing element (28) carried in said groove (26), the sealing element (28) being radially movable by means of a fluid pressure, said fluid pressure being directed to the sealing element (28) through a channel (40) extending from the high pressure side (20) of the space (18) into the groove, is characterized by that a second channel (42) extending from the low pressure side (22) of the space (18) into the groove (26), and a valve (44,46) cbosing the second channel (42) by means of the fluid pressure from the high pressure side (20) of the space.

## Description

### Background of the invention

The present invention relates to a sealing device for sealing a high pressure side from a low pressure side in a space between a stationary component and a rotary component rotating about a rotary axis, said sealing device including a sealing housing having a grove, and a sealing element carried in said grove, the sealing element being radially movable by means of a fluid pressure, said fluid pressure being directed to the sealing element through a channel extending from the high pressure side of the space into the grove.

Further, the present invention relates to a turbine comprising a stationary component, and a sealing device as described above.

In turbines, particularly steam turbines, sealing devices between stationary and rotary components are a critical part of the steam turbine performance. It will be appreciated that the greater, the number and magnitude of steam leakage paths, the greater, the losses of efficiency of the steam turbine. For example, labyrinth sealing devices are often used to seal between the diaphragms and a rotor of a steam turbine or between rotor bucket tips and a shroud.

However, these labyrinth sealing devices require substantial clearances to be maintained to allow for radial and circumferential movement during transient operations of the corresponding steam turbines such as startup and shutdown. These clearances are, of course, detrimental to sealing.

There are also clearance issues associated with sealing devices at which the sealing element receives a radial force to insure minimum clearance in the space to be sealed. The radial force is provided by letting the upstream fluid pressure from the high pressure side act on the outer surface of the sealing element. Thus, the design of these known sealing devices depends on the flow direction of fluid in the corresponding turbine. When the flow direction in the turbine is amended, the radial clearances of these known sealing devices changes, which can diminish sealing efficiency.

Accordingly, there is a need for a sealing device which will eliminate or minimize clearance issues at turbines at which the flow direction of fluid in a space between a stationary component and a rotary component changes. Further, there is a need for a sealing device and a corresponding turbine which will improve serviceability and enable correct adjustment of sealing elements even if the flow direction in the turbine alternates.

### Brief description of the invention

The object mentioned above is solved according to the invention by means of a sealing device according to claim 1 and a turbine according to claim 8. Preferred embodiments of the sealing device according to the invention are described in the dependent claims 2 to 7.

According to the invention a sealing device for sealing a high pressure side from a low pressure side in a space between a stationary component and a rotary component rotating about a rotary axis is provided, said sealing device including a sealing housing, having a grove, and a sealing element carried in said grove, the sealing element being radially movable by means of a fluid pressure, said fluid pressure being directed to the sealing element through a channel extending from the high pressure side of the space into the grove, characterized by a second channel extending from the low pressure side of the space into the grove, and a valve closing the second channel by means of the fluid pressure from the high pressure side of the space.

Further, according to the invention, the problem is solved by a turbine comprising a stationary component, a rotary component and a sealing device as described above for sealing a high pressure side from a low pressure side in a space between the stationary component and the rotary component.

According to the invention a first and a second channel are provided at a radially movable sealing element in order to alternately direct fluid pressure from the high pressure side of the space to be sealed to the movable sealing element, thus forcing the element in a radial direction and minimizing clearance issues even if the direction of flow in the corresponding space has changed. In order to ensure that there is no leakage path through said channels, the channel extending from the grove to the low pressure side of the space is closed by a valve which is switch by means of the fluid pressure from the high pressure side of the space. In other words, channels to the movable sealing element are provided from both sides, however, the channel extending from the low pressure side into said grove is always closed by means of the fluid pressure from the high pressure side. Thus, the sealing device of the invention is independent of flow direction in the space between the stationary component and the rotary component and the highest pressure of the space to be sealed is always established behind the sealing element of the sealing device.

The solution of the invention is in particular important to minimize sealing steam needed to maintain condenser vacuum during overnight stop. This is in particular useful for solar steam turbines. It is further very attractive for frequently starting turbines.

Up to now at these turbines separate sealing carriers for each flow direction had to be provided. This is not necessary at a turbine according to the invention.

In a preferred embodiment of the sealing device according to the invention the valve closing the second channel by means of the fluid pressure from the high pressure side is switched by an axial movement of the sealing element in said grove. This preferred solution is very cost-saving because no additional elements or parts are necessary for said valve, just the sealing element has to be adapted to be movable in an axial direction in said grove thereby opening a channel on one of its lateral surfaces and closing a channel on the opposite lateral surface.

In a further preferred embodiment said valve is a two port directional control valve alternately closing the first or the second channel. The two port directional control valve is preferably a valve member, in particular a ball, slidably located in a cylinder which is biased on one lateral surface by the pressure of the first channel and on the opposite lateral surface by the pressure of the second channel.

The first and second channel preferably extend in the sealing element and/or the sealing housing. Both solutions are of particular advantage in respect of specific pressure situations at the respective sealing device. Channels which are located in the sealing housing may provide fluid pressure into the grove from an area in the space between the stationary component and the rotary component where a particular pressure is applied.

In order to receive minimal radial clearances and to improve serviceability it is preferred to locate a spring in said grove forcing the sealing element out of the grove and to locate said sealing housing including the grove at the stationary component.

### Brief description of the drawings

A preferred exemplary embodiment of a sealing device according to the invention is described hereinafter by reference to the enclosed schematical drawings.
Fig. 1 is a fragmentary cross-sectional view of a sealing device according to the prior art;
Fig. 2 is a fragmentary cross-sectional view of a first embodiment of a sealing device according to the invention;
Fig. 3 is a fragmentary cross-sectional view of a second embodiment of a sealing device according to the invention;
Fig. 4 is a fragmentary cross-sectional view of a third embodiment of a sealing device according to the invention;
Fig. 5 is a fragmentary cross-sectional view of a fourth embodiment of a sealing device according to the invention.

### Detailed description of the invention

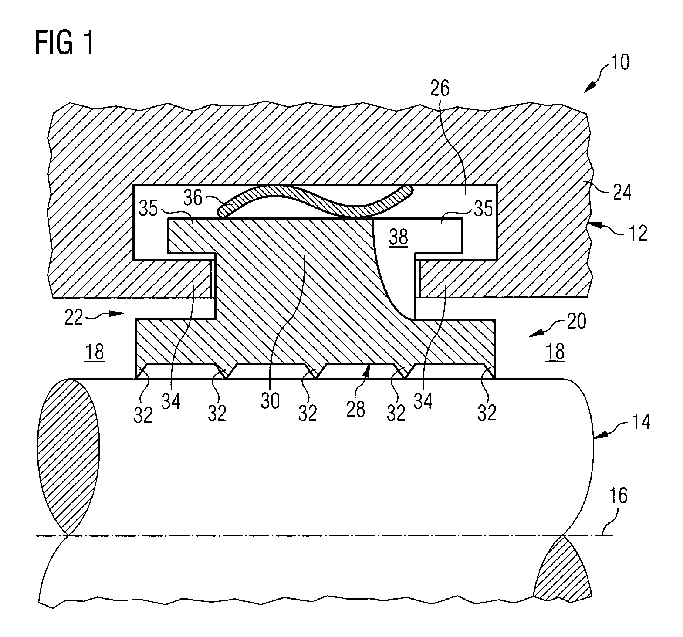

Referring now to the drawing figures, particularly to figure 1, there is illustrated a sealing device 10 of a steam turbine including a stationary component 12 and a rotary component 14 rotating about a rotary axis 16. There is a space 18 between the stationary component 12 and the rotary component 14 which includes a high pressure side 20 and a low pressure side 22.

The sealing device 10 further includes a sealing housing 24 having a grove 26 therein which is located in the stationary component 12 but which may alternatively also by provided at the rotary component 14. The grove 26 holds a sealing element 28 and has a generally complementary shaped dovetail cross-sectional form.

The sealing element 28 includes a sealing ring carrier 30 divided into a number of movable segments, which are located in said grove 26, and several sealing lips 32 which are directed to the opposing element, i.e., the rotary component 14. Thereby, the sealing carrier 30 is held between two flanges 34 of the sealing housing 24 which are located at the opening between the grove 26 and the space 18. The sealing carrier 30 includes two flanges 35, which are reaching behind the flanges 34 into said grove 26. A spring 36 biases the sealing element 28 out of the grove 26, whereupon the sealing element 28 is held by its flanges 35. However, in the usual sealing position the sealing element 28 abuts at the surface of the flanges 34 so the sealing lips 32 are forming a minimum clearance with the rotary component 14. To maintain this position it is necessary to keep the pressure in the groove 26 higher than the pressure in the space between two sealing lips 32 and the rotary component 14. In the sealing ring carrier 30 there further is provided a slot 38 which extends from the high pressure side 20 into said grove 26 and leads fluid pressure into said grove 26. The fluid pressure provides a pressure difference between the grove 26 and the low pressure side 22, and urges the sealing element 28 out of the grove 26. This pressure force provides a smaller clearance of the sealing lips 32 at the surface of the rotary component 14, reduces the radial clearances between the sealing element 28 and the rotary component 14, and improves the sealing capabilities of the entire sealing device 10.

However, this improved sealing capability of the sealing device 10 according to Fig. 1 depends on the particular pressure situation between the high pressure side 20 and the low pressure side 22. In particular, the sealing capability is not improved and even declined when the pressure situation changes in that the low pressure side 22 receives a higher pressure than the high pressure side 20. Due to the slot 38 the pressure in the groove 26 would fall to the level of the pressure side 20. The pressure in the space between two sealing lips 32 would change to be higher than the pressure in the groove 26, thereby forcing the sealing carrier 30 into the groove 26 and leaving the sealing element 28 with a much larger leakage area. This situation of interchanged pressure situations often occur at solar turbines or during starting proceedings of turbines.

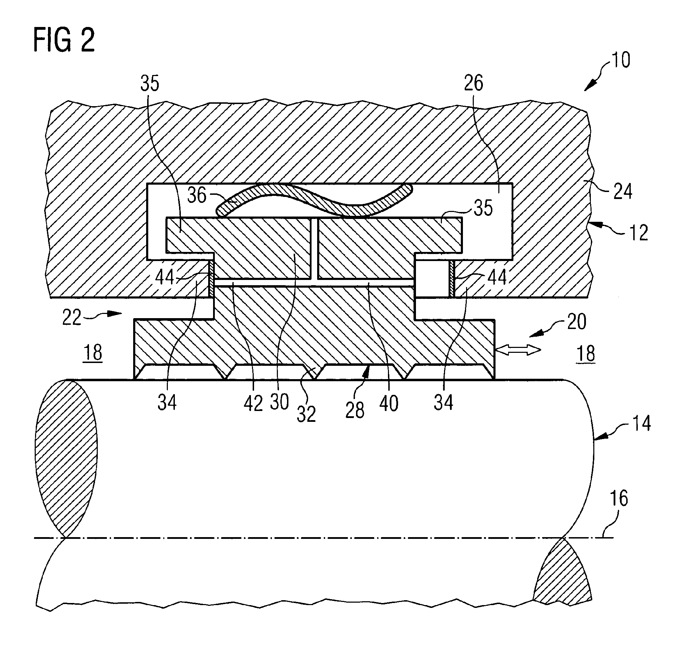

In Fig. 2 to 5 improved sealing devices 10 are depicted each being independent in respect of an interchanged pressures situation between the high pressure side 20 and the low pressure side 22. The sealing devices 10 of Fig. 2 to 5 are also provided between a stationary component 12 and a rotary component 14 including a rotary axis 16. They also have a sealing housing 24 in which a grove 26 is located. A sealing element 28 is accommodated in said grove 26 by a sealing carrier 30. Sealing lips 32 of said sealing element 28 are close to and with a minimum gap to the corresponding rotary component 14. There further also are flanges 35 of the sealing ring carrier 30 and flanges 34 of the sealing housing 24. However, in contrast to the sealing device of Fig. 1 in the sealing devices 10 of Fig. 2 to 5 there are especially adapted channels in order to lead the fluid pressure from the high pressure side 20 into the grove 26 independent of an interchanged pressure situation between the two sides of space 18. In other words, there is a first channel 40 leading fluid pressure from the present high pressure side 20 into the grove 26, and, alternatively there is a second channel 42 leading fluid pressure from the other side 22 of space 18 into the grove 26. In order to assure that the fluid pressure from inside grove 26 may not escape through the second channel 42 into the present low pressure side 22, a valve is provided which is moved by means of the fluid pressure of the present high pressure side 20 and which closes the second channel 42 extending from the present low pressure side 22 into said grove 26.

In Fig. 2 the channels 40 and 42 are located in the sealing element 28 and said valve is switched by an actual axial movement of the sealing element 24 in said grove 26. Thereby, the flanges 34 of the sealing housing 24 include valve surfaces 44 at the side surfaces being directed to the channels 40 and 42 in the sealing element 28 thus closing one of these channels, when the sealing element 28 is actually axially moved by means of the fluid depression between the present high pressure side 20 and the present low pressure side 22.

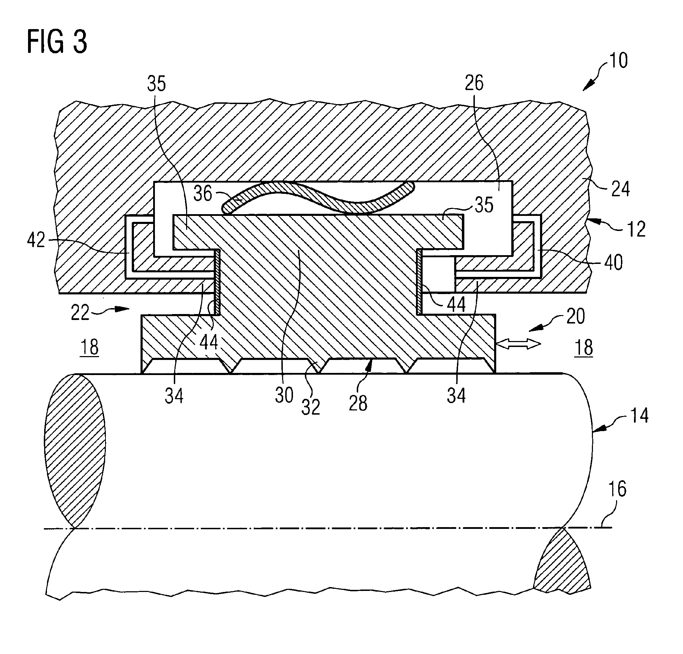

In the Fig. 3 embodiment of the sealing device 10 the channels 40 and 42 are located in the sealing housing 24 and the valve surfaces 44 are provided at the side surfaces of the sealing element 28 being directed to said channels 40 and 42. The channels 40 and 42 thereby extend through the flanges 34 of the sealing housing 28.

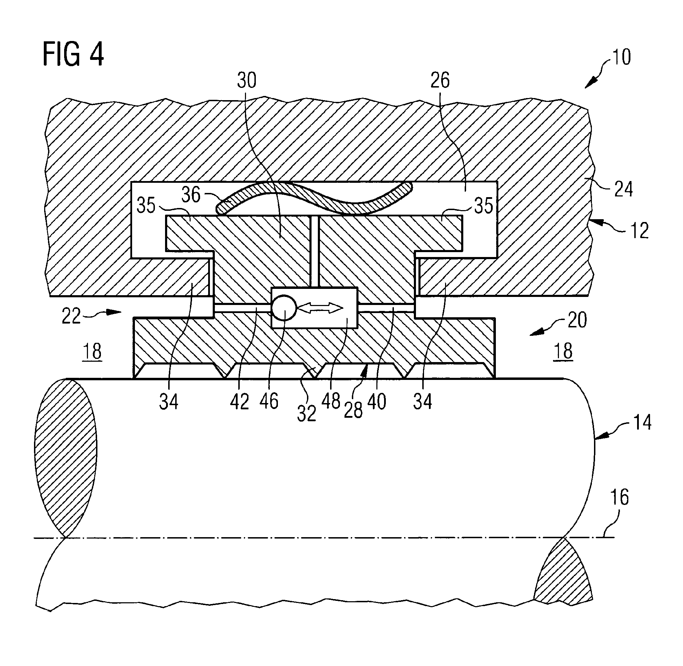

Fig. 4 shows an embodiment of a sealing device 10 at which the channels 40 and 42 are again located in the sealing element 28. A valve member 46 being ball shaped is located in a valve chamber 48 between the first channel 40 and the second channel 42. The valve member 46 alternately closes one of the channels 40 and 42 when fluid pressure enters into the valve chamber 48 from the present high pressure side 20. The fluid pressure 20 is then directed into the grove 26 from the valve chamber 48 and urges the sealing element 28 towards the rotary component 14.

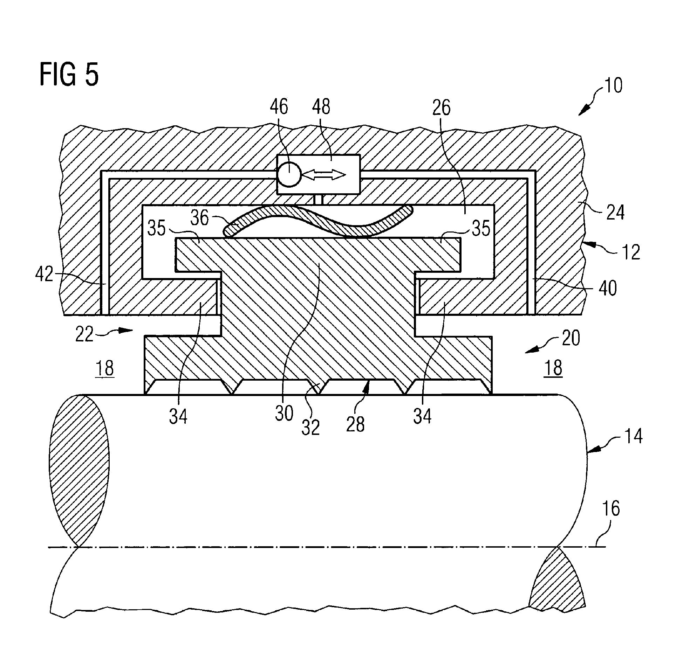

In the embodiment of Fig. 5 the channels 40 and 42 are again provided in the sealing housing 24. Between the channels 40 and 42 there is again a valve chamber 48 including a valve member 46. Accordingly fluid pressure may enter through the corresponding channel 40 or 42 from the present high pressure side 20 into the valve chamber 48 moving said valve member 46 and closing the second channel 42 or 40. Thus, fluid pressure is again provided in said grove 26 even if the pressure situation between the high pressure side and the low pressure side changes.

## Claims

1. Sealing device (10) for sealing a high pressure side (20) from a low pressure side (22) in a space (18) between a stationary component (12) and a rotary component (14) rotating about a rotary axis (16), said sealing device (10) including a sealing housing (24) having a grove (26), and a sealing element (28) carried in said grove (26), the sealing element (28) being radially movable by means of a fluid pressure, said fluid pressure being directed to the sealing element (28) through a channel (40) extending from the high pressure side (20) of the space (18) into the grove,
**characterized by** a second channel (42) extending from the low pressure side (22) of the space (18) into the grove (26), and a valve (44; 46) closing the second channel (42) by means of the fluid pressure from the high pressure side (20) of the space (18).

2. Sealing device according to claim 1, wherein the valve (44) is switched by an axial movement of the sealing element (28) in said grove (26).

3. Sealing device according to claim 1 or 2, wherein the valve (46) is a two port directional control valve alternately closing the first or the second channel (40, 42).

4. Sealing device according to one of claims 1 to 3, wherein the first and the second channel (40, 42) extending in the sealing element (28).

5. Sealing device according to one of claims 1 to 3, wherein the first and the second channel (40, 42) extending in the sealing housing (24).

6. Sealing device according to one of claims 1 to 5, wherein a spring (36) is located in said grove (26) forcing the sealing element (28) out of the grove (26).

7. Sealing device according to one of claims 1 to 6, wherein the sealing housing 24) is located at the stationary component (12).

8. Turbine comprising a stationary component (12), a rotary component (14), and a sealing device (10) according to one of claims 1 to 7 for sealing a high pressure side (20) from a low pressure side (22) in a space (18) between the stationary component (12) and the rotary component (14).
